# EUROPÄISCHE PATENTSCHRIFT

(11) **EP 0 791 871 B1**
(45) Veröffentlichungstag und Bekanntmachung des Hinweises auf die Patenterteilung: **09.10.2002**
(21) Anmeldenummer: 96118510.5
(22) Anmeldetag: 19.11.1996
(51) Int. Cl.: G05B 19/042, H02J 13/00

(54) **Schalteranordnung zur An- und Abschaltung der elektrischen Energiezufuhr von elektrischen Verbrauchern**
Device for switching on and off the supply of electrical energy to electricity consumers
Dispositif pour poursuivre ou interrompre la fourniture d'énergie électrique aux utilisateurs d'électricité

(30) Priorität: 22.02.1996 DE 19606579
(43) Veröffentlichungstag der Anmeldung: 27.08.1997
(73) Patentinhaber: ROBERT BOSCH GMBH, 70442 Stuttgart (DE)
(72) Erfinder: Klingenberg, Wolfgang, 31246 Lahstedt (DE)

(56) Entgegenhaltungen:
- EP-A- 0 513 443
- EP-A- 0 637 784
- WO-A-93/07597
- DE-A- 3 608 910
- DE-A- 3 843 944
- DE-A- 4 425 876
- DE-C- 4 311 096
- MUELLER R: "LON - DAS UNIVERSELLE NETZWERK. TEIL 2" November 1991 , ELEKTRONIK, VOL. 40, NR. 23, PAGE(S) 75/76, 78, 80 - 82 XP002022298 * Abbildungen 5-8 *

## Beschreibung

### Stand der Technik

Die Erfindung geht von einer Schalteranordnung zur An- und Abschaltung der elektrischen Energiezufuhr von elektrischen Verbrauchern nach der Gattung des Hauptanspruchs aus.

In der konventionellen Elektroinstallation werden Schaltvorgänge direkt in der Energieleitung durchgeführt. Um z. B. eine Lampe zu schalten, wird ein Leiter der 220 V-Leitung über einen Lichtschalter zur Lampe geführt. Dadurch entsteht eine feste Zuordnung von Lichtschalter und zu schaltender Lampe.

Aus der Offenlegungsschrift DE 38 43 944 A ist ein in einem Gehäuse angeordnetes elektrisches Schütz bekannt, dessen elektromagnetischer Antrieb über ein Leitungssystem aus einer beliebigen Entfernung ansteuerbar ist und sich dadurch auszeichnet, dass die Ansteuerung des magnetischen Antriebs über eine Installations-BUS-Leitung vorgesehen ist und dass hierfür innerhalb des Gehäuses des Schützes ein BUS-Koppler mit einem Adresseneingabeschalter sowie zusätzlich ein von diesem BUS-Koppler direkt oder indirekt beeinflussbares Schaltrelais angeordnet ist, wobei letzteres eine Schaltstelle im Speisestromkreis für den elektromagnetischen Antrieb bildet. Die Offenlegungsschrift EP 0 637 784 A1 offenbart ein Modul mit BUS-Ankopplern, das mit dem BUS-Ankoppler einerseits mit einem Kontaktsystem zum elektrischen und gegebenenfalls mechanischen Anschließen an einen BUS in Verbindung steht; andererseits steht der BUS-Ankoppler mit einer Auswerteelektronik zur programmierten Verarbeitung von Mess-Signalen bzw. Zustandsinformationen und zur Abgabe von Ausschaltbefehlen in Verbindung. Die Mess-Signale bzw. Zustandsinformationen sind über den BUS zuführbar. Die Ausschaltbefehle sind zur Auslösung eines Auslösesystems für einen Schutzschalter geeignet.

Aus der Offenlegungsschrift EP 0 513 443 A1 ist ein Gebäudemanagementsystem bekannt, das die Regulierung und Steuerung der Funktion von Geräten verbessert. Die Geräte sind über einen Kommunikations-BUS mit einem Steuersystem verbunden, das die automatische Regulierung und Steuerung durchführt. Um eine Neuverdrahtung des BUS zu verhindern, wann immer Veränderungen der Anordnung der Geräte durchgeführt werden, werden Transponder an vorgesehenen Stellen im Gebäude montiert, die BUS-Signale drahtlos zu den Geräten übertragen.

Aus der Offenlegungsschrift DE 44 25 876 A1 ist eine intelligente Steckdose bekannt, die zum Anschluss elektrischer Verbraucher dient, wobei die Verbraucher über ein leisturigsfähiges BUS-System gesteuert werden. Zur Sicherung der Funktion der intelligenten Steckdose über LON-Netzknoten ist deren Programmierung bspw. durch einen an das LON-Netz angeschlossenen PC notwendig. Mit Hilfe der Programmierung können die intelligenten Steckdosen für eine Vielzahl von Funktionen, wie An- und Abschalten, Dimmen, Leistungsmessung, aber auch Übertragung von Sensorsignalen eingestellt und je nach Bedarf auch verändert werden.

Aus der Patentschrift DE 43 11 096 C1 ist eine Teilnehmereinrichtung für ein Installations-BUS-System bekannt, die eine BUS-Koppeleinrichtung enthält, an die eine Ansteuereinrichtung für ein Lastschaltglied angeschlossen ist. Daran ist ein Verbraucher mit einem Niederspannungsnetz angekoppelt. An die BUS-Koppeleinrichtung ist außerdem eine Anschlusseinrichtung für eine Vor-Ort-Bedienungseinrichtung angeschlossen, die Netzspannungssignale als Steuersignale in die Teilnehmereinrichtung eingibt.

### Vorteile der Erfindung

Die erfindungsgemäße Schalteranordnung mit den Merkmalen des Hauptanspruchs hat demgegenüber den Vorteil, daß durch die Verwendung von Buskopplern die Schalteranordnung busfähig wird, so daß eine flexible Zuordnung des Schaltkontaktes zu den an einer elektrischen Energieleitung angeschlossenen elektrischen Verbrauchern ermöglicht wird. Vorteilhaft ist auch, daß die gewünschte Schaltfunktion und die Adresse des vom Schaltkontakt zu schaltenden elektrischen Verbrauchers auf einfache und wenig aufwendige Weise in Form eines Datentelegramms an den Buskoppler des zu schaltenden elektrischen Verbrauchers übertragen wird.

Besonders vorteilhaft ist die gemeinsame Unterbringung des ersten und des zweiten Buskopplers in einem gemeinsamen Gehäuse, wobei Platzbedarf, Kosten und Aufwand bei der Installation eingespart werden. Insbesondere bei der Umbeziehungsweise Nachrüstung von Anlagen der konventionellen Elektroinstallationstechnik auf moderne Bus-Technik genügt es, die beiden Buskoppler in der Nähe des Schaltkontaktes anzuordnen, so daß bei der Installation Zimmerwände nur dort aufgerissen werden müssen, nicht jedoch auch beim elektrischen Verbraucher, so daß insbesondere auch bei Verwendung einer Busleitung als Übertragungsmedium für die Datentelegramme eine Verlegung der Busleitung zum Anschluß des zweiten Buskopplers beim elektrischen Verbraucher nicht erforderlich ist.

Durch die in den Unteransprüchen aufgeführten Maßnahmen sind vorteilhafte Weiterbildungen und Verbesserungen der im Hauptanspruch angegebenen Schalteranordnung möglich.

Vorteilhaft gemäß Anspruch 2 ist die Möglichkeit, die Adresse des vom Schaltkontakt zu schaltenden elektrischen Verbrauchers durch entsprechende Programmierung des ersten Buskopplers vorzugeben. Durch die Programmierung ist auf diese Weise eine einfache und wenig aufwendige Möglichkeit der flexiblen Zuordnung des Schaltkontaktes zu mehreren elektrischen Verbrauchern möglich.

Vorteilhaft gemäß Anspruch 4 ist die Integration des Schaltkontaktes und/oder des gesteuerten Schalters in dem Gehäuse. Auf diese Weise werden der für Herstellung und Installation erforderliche Aufwand und die damit verbundenen Kosten weiter gesenkt. Außerdem wird mehr Platz eingespart.

Eine weitere Einsparung von Aufwand, Kosten und Platzbedarf ist vorteilhafterweise gemäß Anspruch 5 gegeben, indem der erste und der zweite Buskoppler in einem gemeinsamen elektronischen Baustein integriert sind.

Die Verwendung eines Mikroprozessors für den gemeinsamen elektronischen Baustein gemäß Anspruch 6 stellt eine preisgünstige und durch hohe Verarbeitungsgeschwindigkeit gekennzeichnete Lösung dar.

Durch Verwendung eines an den gemeinsamen elektronischen Baustein angeschlossenen Adressenspeichers gemäß Anspruch 7 lassen sich Adressen auf einfache und effiziente Weise für die Zuordnung von Schaltkontakt zu elektrischem Verbraucher verwalten.

Die Verwendung einer Busleitung zur Übertragung der Datentelegramme gemäß Anspruch 8 hat den Vorteil, daß eine umfangreiche individuelle Verdrahtung eingespart und die Übertragung durch ein gemeinsames Übertragungsmedium effizient und mit wenig Aufwand ermöglicht wird.

Vorteilhaft gemäß Anspruch 9 ist die Übertragung von Datentelegrammen über Funk, so daß keine Busleitung installiert werden muß und somit Kosten und Aufwand gespart werden.

### Zeichnung

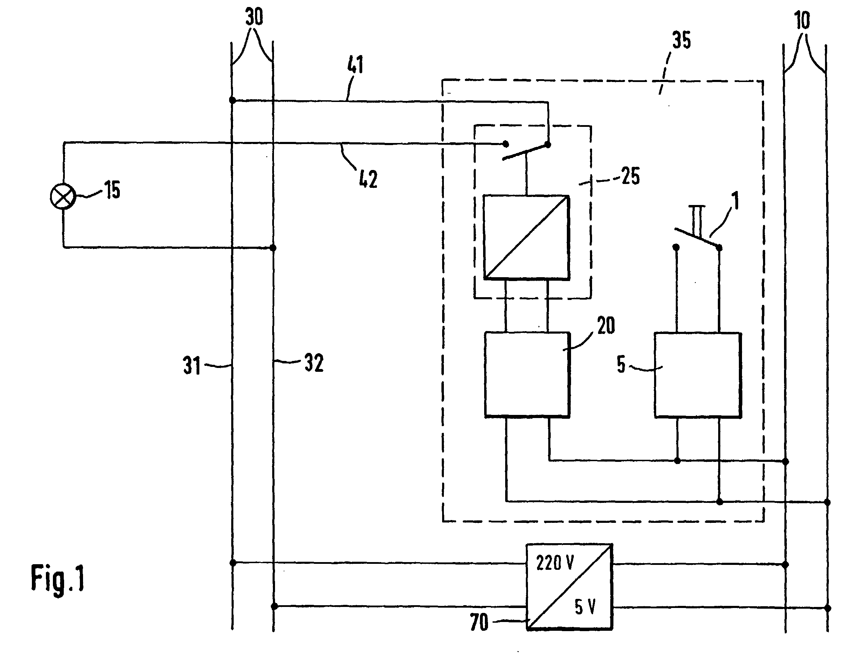

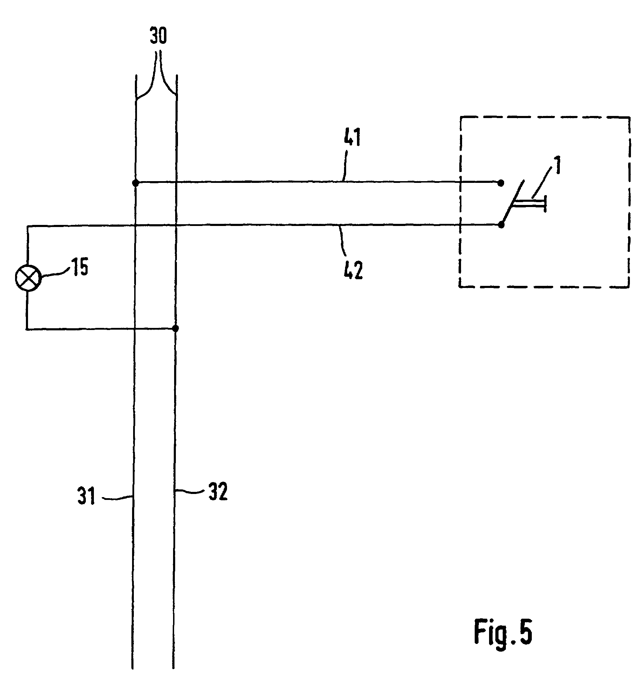

Ausführungsbeispiele der Erfindung sind in der Zeichnung dargestellt und in der nachfolgenden Beschreibung näher erläutert. Es zeigen die Figuren 1 bis 4 jeweils eine erfindungsgemäße Schalteranordnung. Die Figur 5 zeigt eine Schalteranordnung nach dem Stand der Technik.

### Beschreibung der Ausführungsbeispiele

In Figur 1 kennzeichnet 15 einen als Glühbirne ausgebildeten elektrischen Verbraucher, der über einen gesteuerten Schalter 25, der vorzugsweise als Relais ausgebildet ist, mit einer elektrischen Energieleitung 30 verbunden ist. Die elektrische Energieleitung 30 weist einen Phasenleiter 31 und einen Null-Leiter 32 auf. Der Null-Leiter 32 ist direkt mit der Glühbirne 15 und der Phasenleiter 31 ist über den gesteuerten Schalter 25 mit der Glühbirne 15 verbunden. Ein Schaltkontakt 1 ist über einen ersten Buskoppler 5 an eine Busleitung 10 angeschlossen. Der gesteuerte Schalter 25 ist über einen zweiten Buskoppler 20 ebenfalls an die Busleitung 10 angeschlossen. Jeder Buskoppler ist durch eine Adresse eindeutig gekennzeichnet. Die Verbindungsleitungen zwischen dem gesteuerten Schalter 25 und dem zweiten Buskoppler 20, zwischen dem Schaltkontakt 1 und dem ersten Buskoppler 5 sowie zwischen den beiden Buskopplern 5 und 20 und der Busleitung 10 sind ebenso wie die Busleitung 10 zweiadrig ausgeführt. Ein Netzteil 70 verbindet den Phasenleiter 31 und den Null-Leiter 32 der elektrischen Energieleitung 30 zweiadrig mit der Busleitung 10. Dabei wird eine Spannung von 220 Volt der Energieleitung 30 auf eine Betriebsspannung von 5 Volt der Busleitung 10 transformiert und gleichgerichtet. Der gesteuerte Schalter 25, der erste Buskoppler 5, der zweite Buskoppler 20 und der Schaltkontakt 1 sind in einem gemeinsamen Gehäuse 35 integriert. Der Schaltkontakt 1 ist durch einen mechanischen Schalter am Gehäuseäußeren des Gehäuses 35 von einem Benutzer betätigbar. An die elektrische Energieleitung 30 können mehrere elektrische Verbraucher, insbesondere in der beschriebenen Weise, angeschlossen sein. Ebenso können mehrere Schalteranordnungen an die Busleitung 10 angeschlossen sein. Die Busteilnehmer werden über das Netzteil 70 und die Busleitung 10 mit Energie für ihren Eigenbedarf versorgt. Über entsprechende, in Figur 1 nicht dargestellte Schaltungsmaßnahmen, wie zum Beispiel Übertrager, Drosseln und Kondensatoren, können Energieversorgung und Signalweg wieder getrennt werden.

Eine Betätigung des Schaltkontaktes 1 wird vom ersten Buskoppler 5 registriert und gemäß der Programmierung des ersten Buskopplers 5 in Form eines digitalen Datentelegramms, das die Adresse des entsprechenden Buskopplers des vom Schaltkontakt 1 zu schaltenden und an die elektrische Energieleitung 30 angeschlossenen elektrischen Verbrauchers und die gewünschte Schaltfunktion enthält, vom ersten Buskoppler 5 an die Busleitung 10 weitergegeben. Entspricht die im Datentelegramm enthaltene Adresse der Adresse des zweiten Buskopplers 20, so erkennt der zweite Buskoppler 20, daß das Datentelegramm für ihn bestimmt ist und leitet in Abhängigkeit der im Datentelegramm enthaltenen gewünschten Schaltfunktion einen entsprechenden Schaltvorgang des gesteuerten Schalters 25 ein. Die Adressierung des zu schaltenden elektrischen Verbrauchers erfolgt also über die Adressierung des den zu schaltenden elektrischen Verbraucher zugeordneten Buskopplers. Dabei ist in den hier beschriebenen Ausführungsbeispielen der zweite Buskoppler 20 dem elektrischen Verbraucher 15 zugeordnet und der erste Buskoppler 5 dem Schaltkontakt 1. Durch Verwendung der Bustechnik ist eine flexible Zuordnung von Schaltkontakten zu elektrischen Verbrauchern möglich. Diese Zuordnung erfolgt durch entsprechende Programmierung des dem jeweiligen Schaltkontakt zugeordneten Buskopplers. So kann in Figur 1 der erste Buskoppler 5 beispielsweise so programmiert sein, daß er bei Betätigung des Schaltkontaktes 1 die Adresse des zweiten Buskopplers 20 in ein entsprechendes Datentelegramm einfügt. Der erste Buskoppler 5 kann jedoch auch so programmiert sein, daß bei Betätigung des Schaltkontaktes 1 die Adresse eines einem anderen an die elektrische Energieleitung 30 angeschlossenen Verbraucher zugeordneten Buskopplers in ein entsprechendes Datentelegramm eingefügt wird. Auf diese Weise wird dann durch Betätigung des Schaltkontaktes 1 nicht die Glühbirne 15 geschaltet, sondern der entsprechend adressierte andere elektrische Verbraucher. Figur 5 zeigt eine Schalteranordnung nach dem Stand der Technik, bei der die Glühbirne 15 mit dem Null-Leiter 32 der elektrischen Energieleitung 30 verbunden ist. Der Phasenleiter 31 der elektrischen Energieleitung 30 ist über eine erste Zuleitung 41, den Schaltkontakt 1 und eine zweite Zuleitung 42 mit der Glühbirne 15 verbindbar. Bei einer Umbeziehungsweise Nachrüstung einer konventionellen Elektroinstallation gemäß Figur 5, bei der Schaltvorgänge direkt in der elektrischen Energieleitung 30 durchgeführt werden, und bei der eine feste Zuordnung von Schaltkontakt 1 und zu schaltender Glühbirne 15 besteht, müssen lediglich die erste und die zweite Zuleitung 41 und 42, die auch in Figur 1 durch die entsprechenden Bezugszeichen gekennzeichnet sind, vom Schaltkontakt 1 getrennt und direkt an den gesteuerten Schalter 25 angeschlossen werden. Außerdem ist der Schaltkontakt 1 an den ersten Buskoppler 5 anzuschließen. Durch die Integration des ersten Buskopplers 5, des zweiten Buskopplers 20, des Schaltkontaktes 1 und des gesteuerten Schalters 25 in einem gemeinsamen Gehäuse 35 muß bei einem an einer Zimmerwand angebrachten Schaltkontakt 1 die Zimmerwand lediglich dort aufgerissen werden, wo sich der Schaltkontakt 1 befindet, zur Unterbringung des Gehäuses 35 an dieser Stelle, und dort, wo die Zuleitung des ersten Buskopplers 5 und des zweiten Buskopplers 20 zur Busleitung 10, die beispielsweise als Ringleitung auf oder hinter einer am Sockel der Zimmerwand angebrachten Fußleiste verlegt ist, verlaufen kann. Durch die auf einer Bus-Technik basierenden erfindungsgemäße Schalteranordnung wird eine Trennung zwischen der Energieversorgung und der Schalterbetätigung des Benutzers ermöglicht.

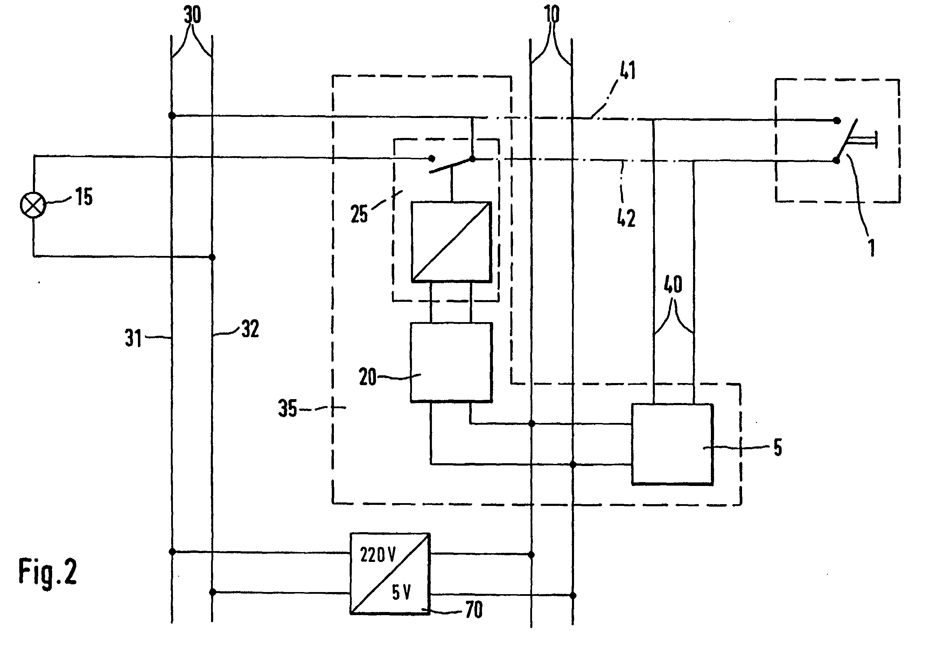

Die Figur 2 zeigt eine andere Ausführungsform der Erfindung, die sich vom Ausführungsbeispiel gemäß Figur 1 lediglich dadurch unterscheidet, daß der Schaltkontakt 1 nicht im Gehäuse 35 integriert ist, sondern über eine zweiadrige Schaltkontakt-Buskoppler-Zuleitung 40 mit dem ersten Buskoppler 5 verbunden ist. Diese Realisierungsform ermöglicht es, das Gehäuse 35 mit dem gesteuerten Schalter 25, dem ersten und dem zweiten Buskoppler 5 und 20 an geeigneter Stelle, beispielsweise in der Nähe einer Abzweigdose, in ein bestehendes 220V-Netz, dargestellt durch die elektrische Energieleitung 30, einzubauen und mit der Busleitung 10, die zusammen mit der elektrischen Energieleitung 30 unter gemeinsamer Nutzung der Abzweigdose verlegt sein kann, zu verbinden. Bei der Installation der Bustechnik gemäß Figur 2 müssen ausgehend von einer konventionellen Elektroinstallation gemäß Figur 5 lediglich die erste und die zweite Zuleitung 41 und 42 aufgetrennt und damit der Schaltkontakt 1 vom 220V-Netz, das durch die elektrische Energieleitung 30 repräsentiert ist, getrennt werden. Anschließend ist der Schaltkontakt 1 über die zweiadrige Schaltkontakt-Buskoppler-Zuleitung 40 mit dem ersten Buskoppler 5 zu verbinden, wobei die Schaltkontakt-Buskoppler-Zuleitung 40 unter Verwendung der bisherigen Leitungen 41 und 42 erstellt werden kann. Die erste und die zweite Zuleitung 41 und 42 werden dann direkt an den gesteuerten Schalter 25 angeschlossen. In Figur 2 sind die erste Zuleitung und die zweite Zuleitung 41 und 42 dort, wo sie bei der Umrüstung der konventionellen Elektroinstallation auf eine busfähige Elektroinstallation aufzutrennen sind, strichpunktiert dargestellt.

Es ist auch möglich, sowohl Schalteranordnungen gemäß der Ausführungsform nach Figur 1 als auch Schalteranordnungen gemäß der Ausführungsform nach Figur 2 gemeinsam an die Busleitung 10 und die elektrische Energieleitung 30 anzuschließen, so daß vielfältige Realisierungsmöglichkeiten gegeben sind.

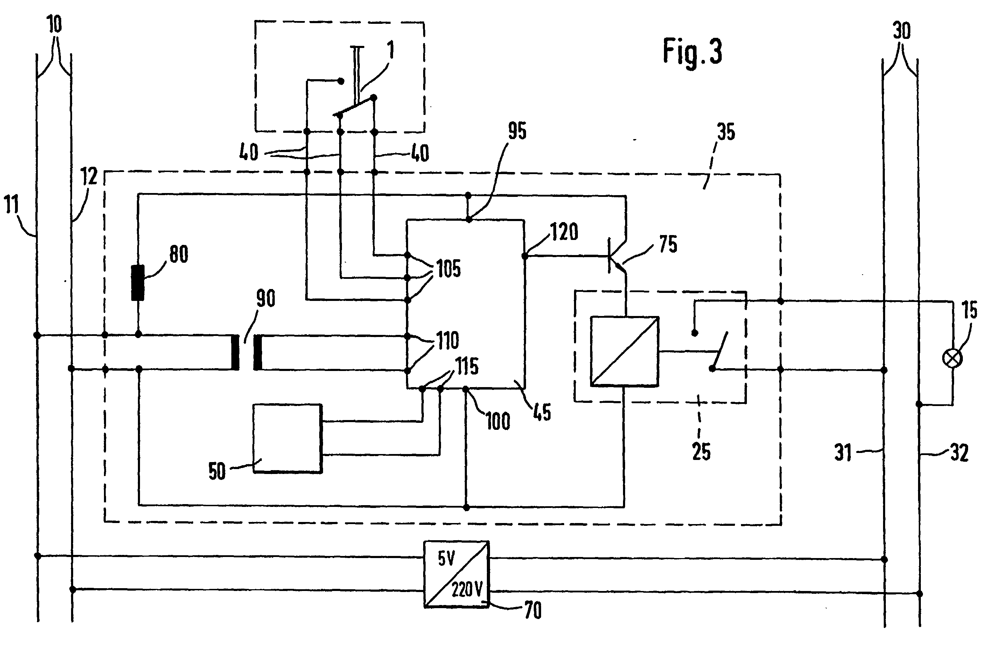

In einem Ausführungsbeispiel gemäß Figur 3 sind der erste und der zweite Buskoppler 5 und 20 in einem gemeinsamen elektronischen Baustein 45 integriert, der vorzugsweise als Mikroprozessor ausgeführt ist. Der Mikroprozessor 45 weist Adressenein-/Ausgänge 115 zum zweiadrigen Anschluß eines Adressenspeichers 50 auf. Der Mikroprozessor 45 weist außerdem einen Eingang 95 für positive Betriebsspannung auf, der über eine Spule 80 mit einer positives Bezugspotential aufweisenden ersten Ader 11 der Busleitung 10 verbunden ist. Der Mikroprozessor 45 weist außerden einen Eingang 100 für das Bezugspotential auf, der mit einer das für die Schalteranordnung benötigte Bezugspotential aufweisenden zweiten Ader 12 der zweiadrigen Busleitng 10 verbunden ist. Das positive Betriebsspannungspotential der ersten Ader 11 entspricht dem für die Schalteranordnung erforderlichen positiven Betriebsspannungspotential. Die auf der Busleitung 10 übertragenden Datentelegramme sind als Datensignal der Betriebsspannung für die Schalteranordnung überlagert und zweiadrig über einen Übertrager 90 Datenein-/Ausgängen 110 des Mikroprozessors 45 zugeführt. Der Mikroprozessor 45 weist außerdem drei Schaltkontakteingänge 105 auf, die über die Schaltkontakt-Buskoppler-Zuleitung 40 mit dem Schaltkontakt 1 verbunden sind. Die Schaltkontakt-Buskoppler-Zuleitung 40 ist in diesem Ausführungsbeispiel dreiadrig ausgeführt, so daß für den Schaltkontakt 1 zusätzlich zur Ein-/Ausstellung eine dritte Schaltfunktion möglich ist. Über einen Schaltausgang 120 ist der Mikroprozessor 45 mit der Basis eines npn-Bipolartransistors 75 verbunden, dessen Kollektor an den Eingang 95 für positive Betriebsspannung und dessen Emitter an den gesteuerten Schalter 25 angeschlossen ist. Der gesteuerte Schalter 25 ist wiederum mit dem Eingang 100 für das Bezugspotential verbunden. Der gesteuerte Schalter 25 ist in bekannter Weise mit der Glühbirne 15 und der Energieleitung 30 verbunden. In ebenfalls bekannter Weise sind die Busleitung 10 und die elektrische Energieleitung 30 über das Netzteil 70 miteinander verbunden. Der Übertrager 90 dient dazu, die Datenein-/Ausgänge 110 von der Betriebsgleichspannung auf der Busleitung 10 zu entkoppeln. Die Spule 80 bildet ein Siebglied, um hochfrequente Datensignale auf der Busleitung 10 von der Stromversorgung des Mikroprozessors 45 zu entkoppeln. Die Steuerung des gesteuerten Schalters 25 durch den Mikroprozessor 45 erfolgt durch ein entsprechendes Schaltsignal am Schaltausgang 120 des Mikroprozessors 45, das den Bipolartransistor 75 je nach gewünschter Schaltfunktion öffnet oder schließt und den als Relais ausgebildeten gesteuerten Schalter 25 damit vom positiven Betriebsspannungspotential trennt oder verbindet, je nach gewünschtem Schaltzustand des Relais 25. Der Mikroprozessor 45 ist nun so programmiert, daß bei einem entsprechenden Schaltvorgang des Schaltkontaktes 1 eine Adresse aus dem Adressenspeicher 50 eingelesen wird und in Abhängigkeit der Schalterstellung des Schaltkontaktes 1 die gewünschte Schaltfunktion erkannt wird. Die Adresse und die gewünschte Schaltfunkton werden dann in ein Datentelegramm geschrieben und über die Datenein-/Ausgänge 110 wird das Datentelegramm an die Busleitung 10 abgegeben. Auf der Busleitung 10 wird das Datentelegramm dann zur Zieladresse übertragen. Entspricht die Zieladresse der Adresse des Mikroprozessors 45, so wird kein Datentelegramm an den Datenein-/Ausgängen 110 abgegeben, sondern direkt der gewünschte Schaltvorgang durch ein entsprechendes Ausgangssignal am Schaltausgang 120 des Mikroprozessors 45 eingeleitet. Die im Adressenspeicher 50 abgelegte und dem Schaltkontakt zugeordnete Zieladresse eines elektrischen Verbrauchers beziehungsweise dessen Buskopplers läßt sich durch entsprechende Umprogrammierung des Mikroprozessors 45 ändern und wird über die Adressenein-/Ausgänge 115 an den Adressenspeicher 50 zur Überschreibung der vorher gültigen Zieladresse abgegeben.

Wie die beiden Buskoppler 5 und 20 gemäß den Ausführungsbeispielen nach Figur 1 und Figur 2, hat auch der Mikroprozessor 45 eine eindeutige Adresse. Datentelegramme, die auf der Busleitung 10 übertragen werden und die Adresse des Mikroprozessors 45 enthalten, werden vom Mikroprozessor 45 über die Datenein-/Ausgänge 110 empfangen und ausgewertet. Je nach der im Datentelegramm enthaltenen gewünschten Schaltfunktion wird ein entsprechendes Schaltsignal am Schaltausgang 120 des Mikroprozessors 45 an den Basiseingang des Bipolartransistors 75 abgegeben.

Im Ausführungsbeispiel gemäß Figur 3 sind wie auch im Ausführungsbeispiel gemäß Figur 2 die Buskoppler und der gesteuerte Schalter 25 im gemeinsamen Gehäuse 35 integriert, nicht jedoch der Schaltkontakt 1, der über die Schaltkontakt-Buskoppler-Zuleitung 40 mit der im Gehäuse 35 befindlichen Schaltung verbunden ist.

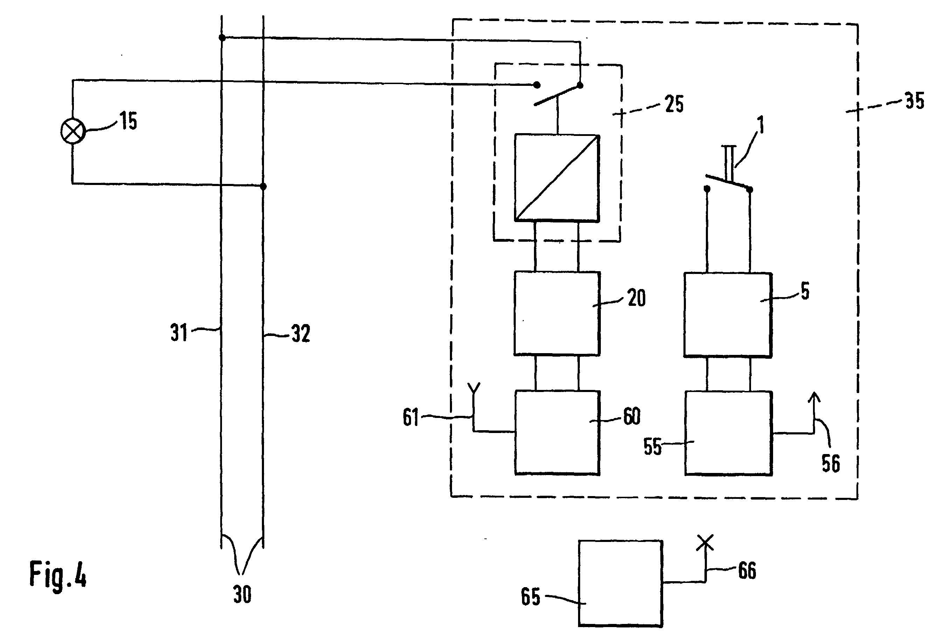

In einem Ausführungsbeispiel gemäß Figur 4 wird eine erfindungsgemäße Schalteranordnung dargestellt, bei der keine Busleitung 10 benötigt wird. Vielmehr ist der erste Buskoppler 5 mit einer Sendeeinheit 55, die eine Sendeantenne 56 aufweist, zweiadrig verbunden. Entspechend ist der zweite Buskoppler 20 zweiadrig mit einer Empfangseinheit 60, die eine Empfangsantenne 61 aufweist, verbunden. Weiterhin ist eine Zentrale 65 vorhanden, die eine Sende-/Empfangsantenne 66 aufweist.

Bei Betätigung des Schaltkontaktes 1 wird ein entsprechendes Datentelegramm im ersten Buskoppler 5 erzeugt und von der Sendeeinheit 55 über die Sendeantenne 56 ausgesendet. Das Datentelegramm wird somit über Funk übertragen und von der Sende-/Empfangsantenne 66 der Zentrale 65 empfangen. Die Zentrale 65 dient dabei als Relaisstation und sendet das Datentelegramm über die Sende-/Empfangsantenne 66 an die im Datentelegramm enthaltene Adresse weiter. Bei entsprechender räumlicher Anordnung der Buskoppler kann auch die Verwendung mehrerer Zentralen 65 notwendig sein. Ein an den zweiten Buskoppler 20 adressiertes Datentelegramm wird nach Empfang durch die Empfangsantenne 61 der Empfangseinheit 60 im zweiten Buskoppler 20 ausgewertet. Der gesteuerte Schalter 25 wird dann in Abhängigkeit der im Datentelegramm enthaltenen gewünschten Schaltfunktion vom zweiten Buskoppler 20 zu einem entsprechenden Schaltvorgang veranlaßt. Im Ausführungsbeispiel nach Figur 4 sind der gesteuerte Schalter 25, der Schaltkontakt 1, der erste und der zweite Buskoppler 5 und 20 sowie die Sendeeinheit 55 und die Empfangseinheit 60 im gemeinsamen Gehäuse 35 untergebracht. Der Anschluß der Glühbirne 15 an die elektrische Energieleitung 30 und den gesteuerten Schalter 25 ist entsprechend dem Ausführungsbeispiel gemäß Figur 1 realisiert.

Bei Systemen mit wenigen Buskopplern und geeigneter räumlicher Anordnung der Buskoppler kann auch auf die Zentrale 65 als Relaisstation verzichtet werden und die Datentelegramme werden direkt zwischen den entsprechenden Buskopplern ausgetauscht.

## Patentansprüche

1. Schalteranordnung zur An- und Abschaltung der elektrischen Energiezufuhr von elektrischen Verbrauchern, wobei ein elektrischer Verbraucher (15) über einen von einem zweiten BUS-Koppler (20) gesteuerten Schalter (25) mit einer elektrischen Energieleitung (30), an die weitere elektrische Verbraucher anschließbar sind, verbindbar ist, wobei ein Schaltkontakt (1) mit einem ersten BUS-Koppler (5) verbunden ist, **dadurch gekennzeichnet, dass** bei Betätigung des Schaltkontaktes (1) durch einen Benutzer mittels eines Schalters der erste BUS-Koppler die Adresse eines vom Schaltkontakt (1) zu schaltenden und an die elektrische Energieleitung (30) angeschlossenen elektrischen Verbrauchers und die gewünschte Schaltfunktion in Form eines Datentelegramms aussendet, dass der zweite BUS-Koppler (20) einen Schaltvorgang des gesteuerten Schalters (25) in Abhängigkeit eines an den dem zweiten BUS-Koppler (20) zugeordneten elektrischen Verbraucher (15) adressierten und an den zweiten BUS-Koppler (20) übertragenen Datentelegramms einleitet und dass der erste und der zweite BUS-Koppler (5, 20) in einem gemeinsamen Gehäuse (35) untergebracht sind.

2. Schalteranordnung nach Anspruch 1, **dadurch gekennzeichnet, daß** die Adresse des vom Schaltkontakt (1) zu schaltenden elektrischen Verbrauchers (15) durch entsprechende Programmierung des ersten Buskopplers (5) vorgebbar ist.

3. Schalteranordnung nach Anspruch 1 oder 2, **dadurch gekennzeichnet, daß** der gesteuerte Schalter (25) ein Relais ist.

4. Schalteranordnung nach Anspruch 1, 2 oder 3, **dadurch gekennzeichnet, daß** der Schaltkontakt (1) und/oder der gesteuerte Schalter (25) in dem Gehäuse (35) integriert sind.

5. Schalteranordnung nach einem der vorherigen Ansprüche, **dadurch gekennzeichnet, daß** der erste und der zweite Buskoppler (5, 20) in einem gemeinsamen elektronischen Baustein (45) integriert sind.

6. Schalteranordnung nach Anspruch 5, **dadurch gekennzeichnet, daß** der gemeinsame elektronische Baustein (45) ein Mikroprozessor ist.

7. Schalteranordnung nach Anspruch 5 oder 6, **dadurch gekennzeichnet, daß** an den gemeinsamen elektronischen Baustein (45) ein Adressenspeicher (50) angeschlossen ist.

8. Schalteranordnung nach einem der vorherigen Ansprüche, **dadurch gekennzeichnet, daß** der erste und der zweite Buskoppler (5, 20) an eine Busleitung (10), die zur Übertragung der Datentelegramme dient, angeschlossen sind.

9. Schalteranordnung nach einem der Ansprüche 1 bis 7, **dadurch gekennzeichnet, daß** der erste Buskoppler (5) mit einer Sendeeinheit (55) zum Aussenden von Datentelegrammen verbunden ist, daß der zweite Buskoppler (20) mit einer Empfangseinheit (60) zum Empfang von Datentelegrammen verbunden ist und daß die Übertragung von Datentelegrammen über Funk erfolgt.

## Claims

1. Switch arrangement for switching the electrical power supply to electrical loads on and off, in which an electrical load (15) can be connected via a switch (25), which is controlled by a second BUS coupler (20), to an electrical power line (30) to which further electrical loads can be connected, with a switching contact (1) being connected to a first BUS coupler (5), **characterized in that**, when the switching contact (1) is operated by a user by means of a switch, the first BUS coupler transmits the address of an electrical load, which is to be switched by the switching contact (1) and is connected to the electrical power line (30), and the desired switching function in the form of a data message, **in that** the second BUS coupler (20) initiates a switching process of the controlled switch (25) as a function of a data message which is transmitted to the second BUS coupler (20) and is addressed to the electrical load (15) which is associated with the second BUS coupler (20), and **in that** the first and the second BUS coupler (5, 20) are accommodated in a common housing (35).

2. Switch arrangement according to Claim 1, **characterized in that** the address of the electrical load (15) which is to be switched by the switching contact (1) can be predetermined by appropriate programming of the first bus coupler (5).

3. Switch arrangement according to Claim 1 or 2, **characterized in that** the controlled switch (25) is a relay.

4. Switch arrangement according to Claim 1, 2 or 3, **characterized in that** the switching contact (1) and/or the controlled switch (25) are/is integrated in the housing (35).

5. Switch arrangement according to one of the preceding claims, **characterized in that** the first and the second bus coupler (5, 20) are integrated in a common electronic module (45).

6. Switch arrangement according to Claim 5, **characterized in that** the common electronic module (45) is a microprocessor.

7. Switch arrangement according to Claim 5 or 6, **characterized in that** an address memory (50) is connected to the common electronic module (45).

8. Switch arrangement according to one of the preceding claims, **characterized in that** the first and the second bus coupler (5, 20) are connected to a bus line (10) which is used for transmitting the data messages.

9. Switch arrangement according to one of Claims 1 to 7, **characterized in that** the first bus coupler (5) is connected to a transmitting unit (55) for transmitting data messages, **in that** the second bus coupler (20) is connected to a receiving unit (60) for receiving data messages, and **in that** the data messages are transmitted by radio.

## Revendications

1. Circuit de branchement et de coupure de l'alimentation électrique de consommateurs électriques selon lequel
un consommateur électrique (15) peut être relié par un interrupteur (25) commandé par un second coupleur de bus (20) à une ligne d'alimentation électrique (30) à laquelle peuvent être reliés d'autres consommateurs électriques,
un contact de commutation (1) étant relié au premier coupleur de bus (5),
**caractérisé en ce que**
lors de l'actionnement du contact de commutation (1) par un utilisateur à l'aide d'un interrupteur, le premier coupleur de bus émet l'adresse d'un consommateur électrique que doit commuter le contact de commutation (1) et qui est relié à la ligne électrique (30), et envoie la fonction de commutation souhaitée sous la forme d'un télégramme de données,
le second coupleur de bus (20) commande une opération de commutation de l'interrupteur commandé (25) en fonction d'un télégramme de données transmis au second coupleur de bus (20) et adressé au consommateur électrique (15), associé au second coupleur de bus (20)
et le premier et le second coupleur de bus (5, 20) sont logés dans un boîtier commun (35).

2. Circuit selon la revendication 1,
**caractérisé en ce que**
l'adresse du consommateur électrique (15) que l'on veut commuter avec le contact de commutation (1) est prédéfinie par une programmation appropriée du premier coupleur de bus (5).

3. Circuit selon l'une quelconque des revendications 1 ou 2,
**caractérisé en ce que**
l'interrupteur commandé (25) est un relais.

4. Circuit selon l'une quelconque des revendications 1, 2, 3,
**caractérisé en ce que**
le contact de commutation (1) et/ou l'interrupteur commandé (25) sont intégrés dans un boîtier (35).

5. Circuit selon l'une quelconque des revendications précédentes,
**caractérisé en ce que**
le premier et le second coupleur de bus (5, 20) sont intégrés dans un composant électronique commun (45).

6. Circuit selon la revendication 5,
**caractérisé en ce que**
le composant électronique commun (45) est un microprocesseur.

7. Circuit selon l'une quelconque des revendications 5 ou 6,
**caractérisé en ce qu'**
une mémoire d'adresses (50) est reliée au composant électronique commun (45).

8. Circuit selon l'une quelconque des revendications précédentes,
**caractérisé en ce que**
le premier et le second coupleur de bus (5, 20) sont reliés à une ligne de bus (10) pour la transmission des télégrammes de données.

9. Circuit selon l'une quelconque des revendications 1 à 7,
**caractérisé en ce que**
le premier coupleur de bus (5) est relié à une unité d'émission (55) pour émettre des télégrammes de données, le second coupleur de bus (20) est relié à une unité de réception (60) pour recevoir des télégrammes de données et la transmission des télégrammes de données se fait par une liaison radio.
